# FASCICULE DE BREVET EUROPEEN

(11) **EP 3 973 141 B1**
(45) Date de publication et mention de la délivrance du brevet: **27.05.2026**
(21) Numéro de dépôt: 20731533.4
(22) Date de dépôt: 28.04.2020
(51) Int. Cl.: E21B 43/36, C02F 1/40, B01D 21/20

(54) **INSTALLATION ET PROCÉDÉ D'ÉLIMINATION SOUS-MARINE DE L'EAU PRODUITE LORS DE LA PRODUCTION SOUS-MARINE D'HYDROCARBURES PAR GRANDES PROFONDEURS**
ANLAGE UND VERFAHREN ZUR UNTERWASSERENTSORGUNG DES BEI DER UNTERWASSERHERSTELLUNG VON KOHLENWASSERSTOFFEN IN GROSSEN TIEFEN ANFALLENDEN WASSERS
FACILITY AND METHOD FOR UNDERWATER DISPOSAL OF THE WATER PRODUCED DURING UNDERWATER PRODUCTION OF HYDROCARBONS AT GREAT DEPTHS

(30) Priorité: 23.05.2019 FR 1905435
(43) Date de publication de la demande: 30.03.2022
(73) Titulaire: SAIPEM S.A., 92800 Puteaux (FR)
(72) Inventeur: CAPELA MORAES, Carlos Alberto, 92210 Saint-Cloud (FR); HALLOT, Raymond, 78960 Voisins le Bretonneux (FR); CHAZOT, Nicolas, 91190 Gif sur Yvette (FR)
(74) Mandataire: Cabinet Beau de Loménie
(86) Numéro de dépôt international: PCT/FR2020/050722
(87) Numéro de publication internationale: WO 2020/234520

(56) Documents cités:
- WO-A2-2009/050367
- US-A1- 2018 179 878

## Description

### Domaine Technique

La présente invention se rapporte au domaine général de la production sous-marine par grandes profondeurs d'hydrocarbures, notamment de pétrole et de gaz. Elle concerne plus précisément l'élimination de l'eau qui est produite lors d'une telle production sous-marine d'hydrocarbures.

### Technique antérieure

Dans les configurations actuelles de production sous-marine d'hydrocarbures en eaux profondes, la configuration généralement retenue est celle de la connexion des puits de production sous-marins, directement ou par l'intermédiaire d'un collecteur sous-marin, à une usine de production flottante.

Cette usine est généralement constituée d'une unité flottante destinée à la production, au stockage et au déchargement de pétrole (dénommée en anglais FPSO pour « Floating production storage and offloading ») vers un pétrolier qui est amarré de façon permanente à un emplacement fixe sur la surface de la mer, à proximité du champ de production sous-marin.

Le FPSO, avec des installations de production primaires sur son pont, effectue habituellement la séparation et le traitement des fluides de production (gaz, huile et eau produite). Concernant ce dernier fluide, l'installation de traitement de surface classique est composée d'hydrocyclones de déshuilage, éventuellement complétés par une unité de dégazage et/ou de flottaison afin de permettre sa vidange en mer avec une teneur en huile réduite (habituellement inférieure à 30 ppm).

Les systèmes classiques de traitement de l'eau produite en surface demandent un travail de maintenance et d'entretien intensif, afin de permettre un fonctionnement correct de manière à obtenir la qualité d'eau requise pour une décharge en mer. En raison des exigences de ces opérations et de la nature de cet équipement (ajustement du nombre d'hydrocyclones au débit d'eau produite à traiter pour maximiser l'efficacité, rétro lavage périodique pour nettoyer les orifices de rejet, etc... ) et de leur maintenance (injection de liquides de lavage par lots périodiques ou même le désassemblage d'unités d'hydrocyclones pour une élimination mécanique du tartre, etc.), et de problèmes de fonctionnement fréquents lorsque ces opérations ne sont pas correctement réalisées, certains opérateurs ont étudié et mis en œuvre des réservoirs de stockage d'eau sur le FPSO pour traiter l'eau produite, au lieu ou en complément de l'usine de traitement d'eau produite classique.

Dans ce cas, l'eau produite est déversée dans ces gros réservoirs, qui fournissent un temps de séjour très élevé, afin de favoriser la flottaison de gouttelettes d'huile dispersées et entraînées uniquement par l'action de la gravité, pendant ce temps de séjour long. Ces grands réservoirs, sans éléments internes, agissent en tant que séparateurs par l'action de la gravité, et ne sont pas susceptibles de poser des problèmes de fonctionnement ou de maintenance aux opérateurs, et éventuellement l'eau atteindra la qualité requise en vue d'être déversée dans la mer ou bien réinjectée dans le réservoir.

Par ailleurs, par opposition à cette configuration usuelle de production, il a été considéré que l'élimination sous-marine de l'eau produite à partir de champs de production d'huile, en particulier dans des profondeurs importantes et pour des contenus en eau élevés de l'huile produite, peut augmenter sensiblement la production d'huile en raison de la réduction de la pression en tête de puits par élimination de la colonne d'eau dans la colonne montante jusqu'à l'unité de production (le FPSO).

La réduction de la pression en tête de puits grâce à l'élimination sous-marine de l'eau peut être significative et elle est plus grande pour des profondeurs d'eau plus importantes et des contenus en eau élevés de l'huile produite. Cette condition d'augmentation du contenu en eau de l'huile produite est très fréquente dans la plupart des champs de production de pétrole, en particulier pendant la dernière partie de la durée de l'exploitation, lorsque l'aquifère tend à atteindre les puits de production.

Actuellement, les systèmes de traitement pour l'élimination sous-marine de l'eau produite à partir de champs de production d'huile sont généralement composés d'hydrocyclones. Or, l'utilisation de séparateurs sous-marins qui sont typiquement employés en surface pour séparer en vrac l'eau de l'huile produite en conditions, n'est pas du tout recommandée en mer profonde à cause de l'épaisseur de paroi nécessaire et des exigences de matériau requise par la pression extérieure, ce qui rend une telle solution non économique.

De plus, les équipements de traitement d'eau classique, tel que des hydrocyclones et des unités de flottaison compactes, sont coûteux à cause des exigences de fonctionnement et de maintenance, même dans les installations de surface où ils sont courants. Cette caractéristique de fonctionnement contribue à réduire la disponibilité de ces équipements installés sur le fond marin où la maintenance directe est impossible. Les problèmes de colmatage dans les petites ouvertures de ces équipements peuvent être difficiles à résoudre dans une application sous-marine, et ceci pourrait conduire à une plus faible disponibilité du système, notamment dans le cas où une procédure de récupération pour le nettoyage doit être mise en œuvre.

Il a également été envisagé d'utiliser des sacs souples en polymère pour le stockage sous-marin d'eau produite. Comme décrit par exemple dans le document WO2016/178985, un réservoir à membrane souple à l'intérieur d'une forme de réservoir classique en acier sous-marin est utilisé pour le stockage des fluides de production (huile et eau produite). L'objectif mentionné dans ce document est de recevoir de l'eau produite même à partir du côté en surface pour effectuer un traitement par lots sur les fonds marins - élimination des solides et de l'huile. L'élimination de solides est effectuée au moyen de la récupération de la vessie et de son remplacement par une nouvelle.

Ce traitement d'élimination sous-marine de l'eau produite n'est pas non plus satisfaisant. En particulier, il n'est pas adapté à un traitement en continu de l'eau produite du fait que le réservoir est déformable et qu'il a donc un volume d'eau variable et un temps de séjour de l'eau variable, ce qui implique qu'il doit être régulièrement vidé avec tous les inconvénients que cela présente (notamment celui de devoir arrêter la production). De plus, l'élimination des solides déposés au fond du réservoir nécessite la récupération de la vessie pour la vider et la remplacer, ce qui s'avère fastidieux.

### Exposé de l'invention

La présente invention a donc pour but principal de proposer une installation et un procédé d'élimination sous-marine de l'eau produite qui ne présente pas les inconvénients précités.

Conformément à l'invention, ce but est atteint grâce à une installation d'élimination sous-marine de l'eau produite lors de la production sous-marine d'hydrocarbures par grandes profondeurs, comprenant :
une station sous-marine de séparation huile/eau alimentée en fluides provenant directement d'au moins un puits de production d'hydrocarbures, fonctionnant à une pression indépendante de la pression environnante et inférieure à celle-ci, et comprenant une sortie en huile destinée à être reliée à une unité de production et une sortie en eau ;
un réservoir plat de séparation huile/eau par gravité reposant sur le fond marin, alimenté en continu en eau sortant de la station de séparation huile/eau, fonctionnant à une pression sensiblement égale à la pression environnante, et comprenant une sortie en huile destinée à être reliée à l'unité de production et une sortie en eau ; et
une pompe haute-pression sous-marine reliée, d'une part à la sortie en eau de la station de séparation huile/eau, et d'autre part à une entrée en eau dudit réservoir pour élever la pression de l'eau sortant de la station de séparation huile/eau jusqu'à la pression environnante avant son admission à l'intérieur dudit réservoir.

L'installation selon l'invention est remarquable notamment en ce qu'elle associe à une station sous-marine de séparation huile/eau fonctionnant à la pression en sortie des puits de production (c'est-à-dire à une pression inférieure à la pression environnante) un réservoir de séparation huile/eau par gravité reposant sur le fond marin. De plus, le réservoir fonctionne à la pression environnante (c'est-à-dire à la pression hydrostatique sous-marine au fond de la mer), ce qui facilite sa construction, réduit les coûts de son installation et le rend particulièrement fiable et robuste pendant l'exploitation (c'est-à-dire avec quasiment aucune défaillance de fonctionnement possible par comparaison à des systèmes conventionnels type hydrocyclones).

Plus précisément, la conception du réservoir plat n'est pas contraignante en termes de fabrication, étant donné qu'il est dimensionné pour être installé et fonctionner sur le fond marin tout le temps et en étant en équilibre de pression avec la pression hydrostatique externe. Aussi, les charges sur le réservoir sont considérablement réduites, ce qui permet de recourir à des parois de faible épaisseur avec tous les avantages que cela procure en termes de fabrication et d'installation.

En d'autres termes, grâce à cet équilibre en pression, les parois du réservoir ne sont soumises à aucune pression différentielle entre l'intérieur et le milieu extérieur, ce qui autorise l'emploi de parois très fines (puisqu' il n'y a pas d'exigence de résistance à l'effondrement ou à l'éclatement). Le dimensionnement du réservoir est basé sur des charges mécaniques dues à des séquences de fabrication, de transport et d'installation, puisqu'il n'y a pas de charges mécaniques autres que le poids propre immergé, qui va agir sur la structure une fois celle-ci installée et en fonctionnement. Ainsi, les procédures de conception et de fabrication, de transport et d'installation sont conçues pour réduire au minimum la durée des sollicitations mécaniques de façon à conduire à une solution économique très légère.

Par réservoir « plat », on entend que le réservoir présente une configuration géométrique permettant un temps de séjour élevé de l'eau produite, un chemin de migration faible pour les gouttelettes d'huile présentes dans l'eau et une surface d'interface huile/eau importante afin de favoriser la séparation huile/eau par gravité.

Dans certaines configurations, un réservoir plat conduit à une faible hauteur et une surface étendue du réservoir. Une telle configuration à faible hauteur et surface étendue du réservoir, conjointement avec son épaisseur de paroi mince conduit à une charge de supportage très faible et contribue à éviter toute exigence particulière pour la fondation sur le site d'installation. Une fondation de type plancher léger reposant sur le fond marin s'adapte à pratiquement n'importe quelle condition de fond sous-marin, pour peu qu'il ait été convenablement nivelé. Cette configuration simplifie également le démantèlement en fin de vie de l'ouvrage.

L'effluent d'eau de production provenant de la station de séparation de la phase eau des effluents d'un champ pétrolifère pénètre dans le réservoir et se déplace à travers celui-ci à une vitesse très lente, et reste à l'intérieur du réservoir pendant une durée importante (au moins de deux ordres de grandeur plus élevé que dans la station de séparation). Cela signifie que le réservoir présente un volume très important pour permettre son utilisation en ligne avec la production du champ, dans un mode de fonctionnement continu, avec un grand temps de résidence (typiquement au minimum de 1 jour).

Par ailleurs, la géométrie de faible hauteur du réservoir offre une surface transversale réduite faisant face aux courants marins (supposés parallèles au fond de la mer) et contribue à réduire les charges longitudinales sur sa structure. Sa grande surface et sa forme plate conduisent à un moment d'inertie de section transversale réduite, permettant une certaine flexibilité et une flexion sous l'action de charges verticales dues à la houle lors de son amenée sur site en remorquage en flottaison. Après l'installation aucune sollicitation de fatigue n'est attendue, puisque la structure repose sur le fond marin et ces charges cycliques n'agissent plus.

De plus, la caractéristique de la géométrie de faible hauteur du réservoir conduit à une très bonne qualité d'eau produite en réduisant le trajet de dégagement des gouttelettes d'huile et en offrant un rapport élevé de zone d'interface huile/eau de volume de fluide, et améliore le processus de crémage (par flottaison des gouttelettes d'huile dispersée) sous l'action de la gravité en comparaison avec les séparateurs à gravité de surface correspondants.

Ainsi, la présente invention utilise un équipement qui cumule une fiabilité élevée, une efficacité améliorée de la séparation huile/eau par gravité (en soumettant le courant d'eau produite à un temps de séjour important dans le réservoir sous l'action de la gravité), et une configuration simple, économique et robuste. La grande taille du réservoir (dimensionnée pour le débit d'eau produit maximal attendu pendant la durée d'exploitation du champ pétrolier sous-marin) assure une robustesse élevée concernant les conditions d'entrée de fluide. Contrairement aux solutions alternatives qui reposent sur un équipement ayant une inertie volumétrique réduite (basée sur des hydrocyclones ou des unités de flottaison compactes par exemple), les éventuels engorgements en huile - dus à un dysfonctionnement et/ou un mauvais fonctionnement du séparateur huile-eau en amont - sont rapidement séparés une fois qu'ils ont atteint l'intérieur du réservoir, grâce à la stabilité de ces gros globules d'huile obtenus par les conditions d'écoulement très lisses à l'intérieur du réservoir et à leur vitesse élevée en flottaison.

Appliqué à des champs de pétrole situés par grandes profondeurs (supérieures à 700 mètres) et qui présentent une augmentation croissante de la production de contenu en eau, la présente invention permet ainsi d'augmenter sensiblement la production d'huile en raison de la réduction de la pression en tête de puits par élimination de la colonne d'eau dans la colonne montante jusqu'à l'unité de production. Plus les profondeurs sont élevées et plus les contenus en eau de l'huile produite sont élevés, plus la réduction de la pression en tête de puits pourra être significative.

Le réservoir peut comprendre en outre en partie haute un dispositif de collecte de gouttelettes d'huile s'ouvrant vers la sortie en huile du réservoir. Dans ce cas, le réservoir comprend avantageusement en outre en partie haute des moyens d'évacuation périodique de l'huile présente au niveau du dispositif de collecte. Ces moyens d'évacuation périodique des gouttelettes d'huile peuvent comprendre un réseau de tuyaux d'aspiration commandé par une vanne tout ou rien apte à s'ouvrir dans le dispositif de collecte.

Le réservoir peut comprendre en outre en partie basse des moyens de collecte et d'évacuation périodique de particules solides éventuellement déposées sur un plancher du réservoir. Dans ce cas, les moyens de collecte et d'évacuation des particules solides comprennent avantageusement un réseau de tuyaux d'aspiration commandés par une vanne, et des buses d'injection d'eau sous pression en direction du plancher du réservoir.

La sortie en huile du réservoir peut être reliée à la sortie en huile de la station de séparation par l'intermédiaire d'au moins une vanne tout ou rien. De même, la sortie en eau du réservoir peut déboucher dans la mer par l'intermédiaire d'une pompe basse-pression ou déboucher vers un puits d'injection d'eau par l'intermédiaire d'une pompe haute-pression.

Selon un mode de réalisation, le réservoir présente une forme cylindrique avec un plancher plat, un toit incliné vers le haut afin de faciliter la collecte des gouttelettes d'huile, une entrée en eau qui débouche à l'intérieur du réservoir au centre de celui-ci par l'intermédiaire d'un dispositif cyclonique afin d'imposer une vitesse de rotation initiale à l'eau admise dans le réservoir, une sortie en huile qui est positionnée au niveau du toit incliné, et une sortie en eau qui comprend une pluralité d'écopes pratiquées à la périphérie du réservoir et s'ouvrant à l'intérieur de celui-ci selon des directions tangentielles.

Selon un autre mode de réalisation, le réservoir présente une pluralité de conduites de grand diamètre et de grande longueur disposées parallèlement les unes aux autres, reposant sur un fond marin, l'entrée en eau du réservoir s'effectuant à une même extrémité d'entrée de chaque conduite, et la sortie en huile et la sortie en eau du réservoir s'effectuant à une même extrémité opposée de sortie de chaque conduite.

Dans ce mode de réalisation, si le fond marin sur lequel repose le réservoir présente une inclinaison horizontale, les conduites reposent sur le fond marin de sorte à ce que leur extrémité de sortie soit inclinée vers le haut par rapport à leur extrémité d'entrée.

Alternativement, si le fond marin sur lequel repose le réservoir est horizontal, les conduites reposent sur le fond marin par l'intermédiaire de moyens d'inclinaison de sorte à ce que leur extrémité de sortie soit inclinée vers le haut par rapport à leur extrémité d'entrée.

Dans ce cas, les moyens d'inclinaison peuvent comprendre des supports donnant une inclinaison aux conduites du réservoir qui reposent sur ceux-ci. Alternativement, ils peuvent comprendre des systèmes d'ancrage sur le fond marin de l'extrémité d'entrée des conduites et des systèmes de flotteurs reliés à l'extrémité de sortie des conduites pour les incliner vers le haut par rapport aux extrémités d'entrée.

Selon encore un autre mode de réalisation, le réservoir peut présenter une conduite de grand diamètre et de très grande longueur, l'entrée en eau du réservoir s'effectuant à une extrémité d'entrée de la conduite qui est ancrée sur le fond marin, et la sortie en huile et la sortie en eau du réservoir s'effectuant à l'extrémité opposée de sortie de la conduite qui est reliée à des flotteurs pour donner à la conduite une forme de caténaire.

Dans ces deux derniers modes de réalisation, chaque conduite peut présenter une forme en boucle, en serpentin ou en spirale.

Selon encore un autre mode de réalisation, la conduite comprend une unique conduite formant une hélice, l'entrée en eau du réservoir s'effectuant à une extrémité d'entrée de la conduite, et la sortie en huile et la sortie en eau du réservoir s'effectuant à l'extrémité opposée de sortie de la conduite.

Selon encore un autre mode de réalisation, le réservoir comprend une pluralité de canaux de section parallélépipédique qui sont disposés en hélice, l'entrée en eau du réservoir s'effectuant à une même extrémité d'entrée de chaque canal, et la sortie en huile et la sortie en eau du réservoir s'effectuant à une même extrémité opposée de sortie de chaque canal.

Selon encore un autre mode de réalisation, le réservoir comprend une pluralité de tuiles identiques en forme chacune de dièdre, inclinées à 30° par rapport à l'horizontale, et agencées en plusieurs séries de tuiles.

De préférence, la pompe haute-pression est une pompe de coalescence à plusieurs étages qui permet d'éviter le cisaillement des gouttelettes d'huile dispersées par l'action de la pompe centrifuge, et ainsi améliorer davantage le traitement de l'eau.

L'invention a également pour objet un procédé d'élimination sous-marine de l'eau produite lors de la production sous-marine d'hydrocarbures par grandes profondeurs, comprenant l'alimentation en fluides provenant directement d'au moins un puits de production d'hydrocarbure d'une station sous-marine de séparation huile/eau fonctionnant à une pression indépendante de la pression environnante et inférieure à celle-ci, et l'alimentation en continu d'un réservoir plat de séparation huile/eau par gravité reposant sur le fond marin par de l'eau produite sortant de la station de séparation huile/eau, l'eau produite alimentant le réservoir ayant été préalablement pressurisée pour atteindre une pression sensiblement égale à la pression environnante.

### Brève description des dessins

[Fig. 1] La figure 1 est une vue schématique d'une installation de production sous-marine d'hydrocarbures par grandes profondeurs à laquelle s'applique l'invention ;
[Fig. 2] La figure 2 représente une installation d'élimination sous-marine de l'eau produite selon un mode de réalisation de l'invention ;
[Fig. 3] La figure 3 est une vue de côté du réservoir de l'installation de la figure 2 ;
[Fig. 4] La figure 4 est une vue en coupe transversale du réservoir de la figure 2 ;
[Fig. 5] La figure 5 montre en détails un exemple de collecte et d'évacuation des particules solides du réservoir de la figure 2 ;
[Fig. 6] La figure 6 montre en détails un autre exemple de collecte et d'évacuation des particules solides du réservoir de la figure 2 ;
[Fig. 7] La figure 7 représente une installation d'élimination sous-marine de l'eau produite selon un autre mode de réalisation de l'invention ;
[Fig. 8] La figure 8 est une variante de réalisation du réservoir de la figure 7 ;
[Fig. 9] La figure 9 est une autre variante de réalisation du réservoir de la figure 7 ;
[Fig. 10] La figure 10 représente un réservoir d'une installation d'élimination sous-marine de l'eau produite selon encore un autre mode de réalisation de l'invention ;
[Fig. 11] La figure 11 représente un réservoir d'une installation d'élimination sous-marine de l'eau produite selon une variante du mode de réalisation de la figure 10 ;
[Fig. 12] La figure 12 représente un réservoir d'une installation d'élimination sous-marine de l'eau produite selon encore un autre mode de réalisation de l'invention ;
[Fig. 13] La figure 13 représente un réservoir d'une installation d'élimination sous-marine de l'eau produite selon encore un autre mode de réalisation de l'invention ;
[Fig. 14] La figure 14 représente un réservoir d'une installation d'élimination sous-marine de l'eau produite selon encore un autre mode de réalisation de l'invention ;
[Fig. 15] La figure 15 montre en détails l'un des canaux du réservoir de la figure 14 ; et
[Fig. 16] La figure 16 représente un réservoir d'une installation d'élimination sous-marine de l'eau produite selon encore un autre mode de réalisation de l'invention.

### Description des modes de réalisation

L'invention s'applique à la production et au traitement sous-marin d'hydrocarbures, notamment de pétrole et de gaz, par grandes profondeurs (c'est-à-dire supérieures à 700 mètres) à partir de champs de pétrole qui présentent une augmentation croissante de la production de contenu en eau. Elle concerne plus précisément l'élimination (ou le traitement) des contenus en eau de l'huile produite.

L'augmentation du contenu en eau de l'huile produite est devenue très fréquente dans la plupart des champs de production de pétrole, en particulier pendant la dernière partie de la durée d'exploitation, lorsque l'aquifère tend à atteindre les puits de production.

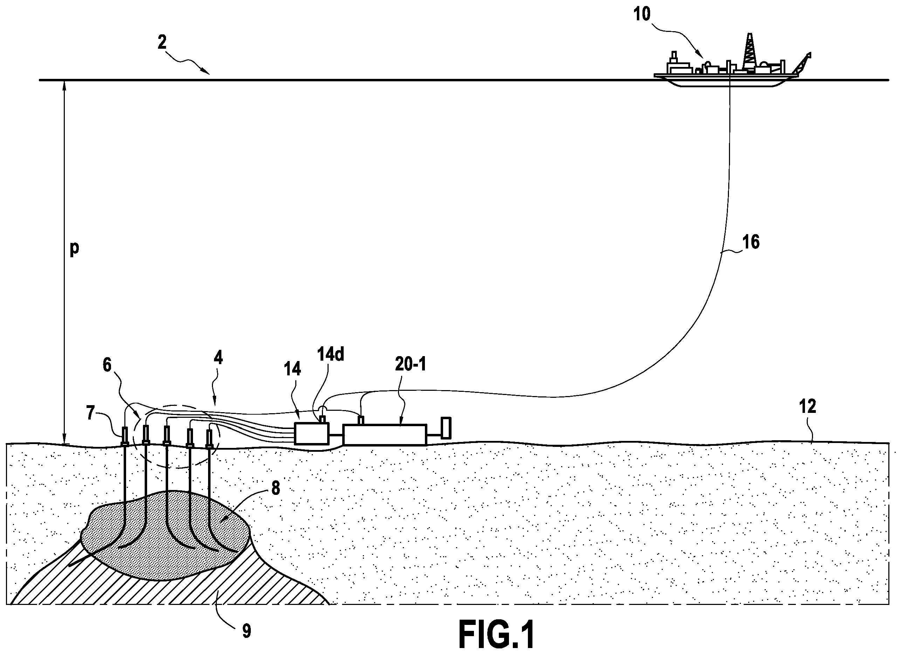

La figure 1 représente un exemple d'installation de production sous-marine d'hydrocarbures 2 par grandes profondeurs à partir d'un champ de production de pétrole 4.

Typiquement, un champ de production de pétrole 4 est exploité à une profondeur d'eau p comprise entre 1000m et 3000m. Il se compose d'une pluralité de puits de production d'hydrocarbures 6 destinés à collecter le pétrole et le gaz provenant d'un réservoir de pétrole 8 dans la roche-réservoir, et éventuellement d'au moins un puits d'injection d'eau produite 7 dans l'aquifère 9.

Les hydrocarbures extraits sont typiquement envoyés vers une unité de production 10 en surface, par exemple une unité flottante destinée à la production, au stockage et au déchargement de pétrole (dénommée en anglais FPSO pour « Floating production storage and offloading »), par l'intermédiaire de conduites sous-marines et de colonnes montantes 16.

Avant de remonter vers l'unité de production 10, les hydrocarbures extraits du réservoir de pétrole 8 sont traités au niveau du fond marin 12 pour notamment séparer l'huile produite de l'eau contenue dans celle-ci.

A cet effet, l'installation de production sous-marine d'hydrocarbures 2 comprend une station sous-marine de séparation huile/eau 14 qui est alimentée en fluides provenant des puits de production d'hydrocarbures 6.

Selon l'invention, cette station de séparation huile/eau 14 fonctionne à une pression qui est indépendante de la pression environnante et inférieure à celle-ci. Cette pression de fonctionnement est définie par l'opérateur pendant les études de simulation de l'écoulement du pétrole brut et de celles de la roche-réservoir. Elle est optimale pour améliorer la récupération d'huile. A titre d'exemple, pour une profondeur d'eau p d'environ 2000 mètres, la pression de fonctionnement de la station de séparation huile/eau peut être de l'ordre de 80 bars (la pression environnante à cette profondeur étant de 200 bars).

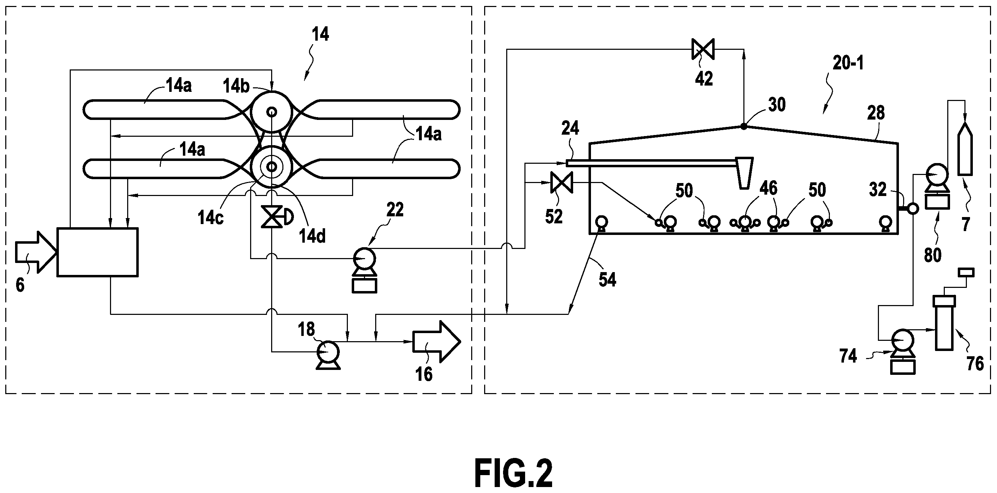

Différents types de station sous-marine de séparation huile/eau peuvent être utilisées. Comme représenté plus en détails sur la figure 2, on pourra en particulier utiliser un dispositif modulaire de séparation gravitaire liquide/liquide constitué d'une pluralité de tuyaux sans éléments internes formant des boucles parallèles 14a (appelées bobines) qui peuvent être installés sur le fond marin du fait que leur diamètre réduit fournit une résistance élevée à la pression différentielle externe/interne.

Un exemple d'un tel dispositif modulaire de séparation gravitaire liquide/liquide est décrit dans la publication WO 2011/161343 au nom de la Demanderesse. La longueur élevée et la section transversale circulaire des tuyaux de ce dispositif de séparation permettent d'obtenir une résistance à la pression différentielle élevée dans une configuration de poids relativement faible. En outre, sa configuration modulaire permet des conditions d'installation flexibles, même pour des systèmes à haute capacité (débit d'entrée élevé). Ainsi, ce dispositif permet la séparation primaire d'eau brute en vrac à n'importe quelle pression souhaitée, en particulier à une pression faible, indépendamment de la pression environnante (profondeur de l'eau).

Comme représenté sur la figure 2, la station sous-marine de séparation huile/eau 14 comprend également une entrée en hydrocarbures 14b, et une sortie en huile (et gaz) 14c qui est reliée à l'unité de production 10 en surface par l'intermédiaire d'une colonne montante 16 (et éventuellement au moyen d'une pompe 18).

La station sous-marine de séparation huile/eau 14 comprend encore une sortie en eau 14d qui est destinée à être reliée à un réservoir plat 20-1 de séparation huile/eau par gravité reposant sur le fond marin 12.

Plus précisément, l'alimentation en eau issue de la station sous-marine de séparation huile/eau 14 est réalisée par l'intermédiaire d'une pompe haute-pression sous-marine 22 qui est reliée, d'une part à la sortie en eau 14d de la station de séparation huile/eau 14, et d'autre part à une entrée en eau 24 dudit réservoir.

Le réservoir plat et de faible hauteur 20-1 est un système de traitement d'eau produite situé en aval de la station de séparation huile/eau 14. Ce système qui est décrit en détails ci-après fonctionne à une pression sensiblement égale à la pression environnante (i.e. la pression hydrostatique externe due à la colonne d'eau de mer), c'est-à-dire à une pression supérieure à la pression de fonctionnement de la station de séparation huile/eau.

Pour ce faire, la pompe haute-pression 22 a pour fonction d'élever la pression de l'eau en sortie de la station de séparation huile/eau jusqu'à ce qu'elle atteigne la pression environnante de fonctionnement du réservoir 20-1 avant son admission à l'intérieur de celui-ci. Par exemple, pour une profondeur d'eau p d'environ 2000 mètres (soit une pression environnante de 200 bars), la pression de fonctionnement de la station de séparation huile/eau étant de l'ordre de 80 bars, la pression différentielle requise par la pompe haute-pression 22 est de 120 bars.

De préférence, la pompe haute-pression 22 est une pompe de coalescence à plusieurs étages centrifuges pour éviter un cisaillement des gouttelettes d'huile dispersées par l'action des roues de la pompe centrifuge.

Le réservoir 20-1 selon l'invention est dimensionné pour être installé et fonctionner sur le fond marin, tout le temps, en étant en équilibre de pression avec la pression hydrostatique externe (due à la colonne d'eau de mer). Ceci permet des charges bien réduites sur le réservoir conduisant à des parois de faible épaisseur, ce qui facilite à la fois le processus de fabrication et d'installation du réservoir.

L'effluent d'eau de production provenant de la station sous-marine de séparation huile/eau 14 pénètre dans le réservoir 20-1 et se déplace à travers celui-ci à une vitesse très lente, et reste à l'intérieur de celui-ci pendant une durée importante (au moins de deux ordres de grandeur plus élevé que dans un équipement de séparation normalement utilisé pour cette fonction). Cela signifie que le réservoir présente un volume très important pour permettre son utilisation en ligne avec la production du champ, dans un mode de fonctionnement continu, avec un grand temps de résidence (typiquement au minimum, 1 jour).

Différents matériaux et composants peuvent être utilisés dans la construction du réservoir 20-1, à savoir par exemple des tôles d'acier ou d'aluminium (avec ou sans structure de renfort interne ou externe), des plaques de polymère ou en matériau composite rigide (avec ou sans structure de renfort interne ou externe ou de structure de renfort en acier interne ou externe), etc. Le réservoir comprend une enveloppe rigide.

La configuration détaillée du réservoir 20-1 peut varier (il peut être de forme parallélépipédique plate, de forme tubulaire ou cylindrique, ou multi-cylindrique, avec des parois rigides ou flexibles, ou bien encore de forme tubulaire très longue, etc.), tant que les caractéristiques géométriques principales sont conservées, c'est-à-dire avec une faible hauteur et une grande empreinte au sol, formant une configuration plate. La configuration devant être adoptée sera sélectionnée selon les données du projet, visant à mettre en œuvre une solution technique économique.

Quelle que soit sa configuration, le réservoir présente une configuration géométrique permettant un temps de séjour élevé de l'eau, un chemin de migration faible pour les gouttelettes d'huile présentes dans l'eau et une surface d'interface huile/eau importante afin de favoriser la séparation huile/eau par gravité.

Par ailleurs, l'installation du réservoir depuis la surface jusqu'au fond marin sera effectuée avec un remplissage par un liquide moins dense que l'eau de mer (eau douce, eau de mer, huile, diester, alcool...) ou bien d'eau de mer, opération qui peut être assistée ou non par l'utilisation de flotteurs pour conférer à l'ensemble une flottabilité positive. Le liquide interne et les flotteurs seront récupérés après installation sur le fond marin. En variante ou en complément, des billes solides flottantes à l'intérieur du réservoir peuvent également être utilisées dans le même but, c'est-à-dire qu'elles seront conçues pour assurer une gestion de densité correcte pendant l'installation pour faciliter le déploiement dans des profondeurs d'eau importantes, sans nécessiter de navires de levage de forte capacité.

L'injection de billes solides flottantes peut également être utilisée ainsi que l'injection de liquide moins dense que l'eau de mer pour récupérer le réservoir pendant la phase de démantèlement.

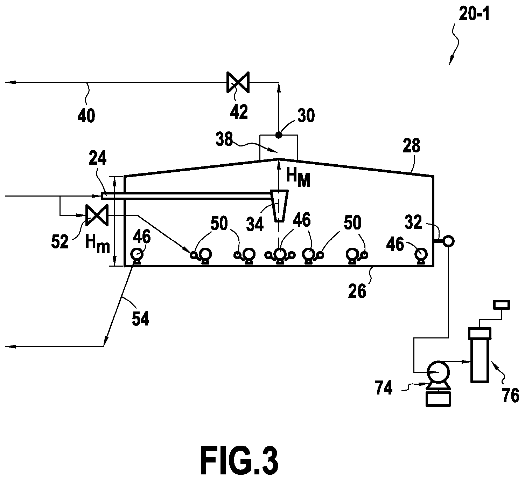

On décrira maintenant en liaison avec les figures 3 à 6 la configuration géométrique d'un réservoir selon un premier mode de réalisation de l'invention.

Dans ce premier mode de réalisation, le réservoir 20-1 présente une forme cylindrique avec un plancher 26 plat, un toit 28 incliné vers le haut afin de faciliter la collecte des gouttelettes d'huile, une entrée en eau 24 qui débouche à l'intérieur du réservoir, une sortie en huile 30 qui est positionnée au niveau du toit 28 incliné, et une sortie en eau 32.

A titre d'exemple, pour 100 000 barils par jour d'eau à éliminer (environ 16 000 m³/jour) et un temps de séjour d'une journée, on pourra avoir comme dimensions pour le réservoir un diamètre ϕ de 90 m, une hauteur minimale Hₘ de 2 m (à la périphérie) et une hauteur maximale H_{M} (au centre) de 4 m (le réservoir présente une forme de cylindre de 2 m de hauteur assemblé à un cône de 90 m de diamètre et de hauteur de 2 m).

Plus précisément, l'entrée en eau 24 débouche au centre du réservoir par l'intermédiaire d'un dispositif cyclonique 34 permettant d'imposer une vitesse de rotation initiale à l'eau admise dans le réservoir. Un tel dispositif cyclonique 34 est connu en soi et ne sera donc pas décrit en détails. Il permet de favoriser une première séparation de l'huile et des sédiments dispersés. La vitesse de rotation initiale à l'intérieur du réservoir a également pour objectif d'éviter certains volumes morts (dus aux courts circuits de fluide) à l'intérieur du réservoir.

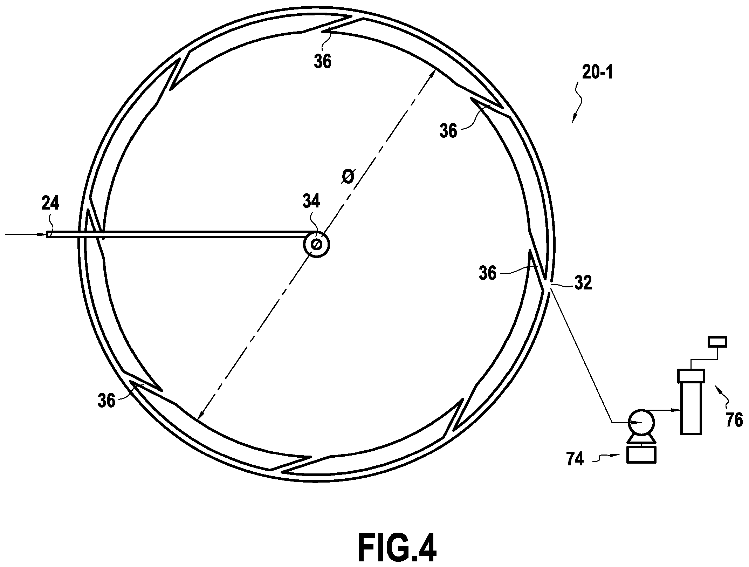

Comme représenté sur la figure 4, l'évacuation de l'eau s'effectue au moyen d'une pluralité d'écopes 36 qui sont pratiquées à la périphérie du réservoir, qui s'ouvrent à l'intérieur de celui-ci selon des directions tangentielles, et qui débouchent vers la sortie en eau 32. En particulier, ces écopes 36 présentent des directions tangentielles qui permettent de conserver le mouvement de rotation imposé à l'eau par le dispositif cyclonique 34.

Par ailleurs, le réservoir 20-1 comprend également en partie haute (c'est-à-dire au niveau de la partie la plus élevée de son toit 28) un dispositif de collecte 38 de gouttelettes d'huile (ci-après appelé écrémeur) qui s'ouvre vers la sortie en huile 30 du réservoir.

On notera qu'aucune structure interne au réservoir n'est nécessaire pour permettre aux gouttelettes d'huile d'atteindre l'écrémeur 38 positionné au point haut du réservoir. En effet, les gouttelettes d'huile remontent par gravité vers le toit 28 du réservoir et l'inclinaison de celui-ci permet de les diriger vers l'écrémeur.

L'écrémeur 38 est avantageusement couplé à des moyens d'évacuation périodique de l'huile écrémé. Plus précisément, l'huile accumulée dans l'écrémeur est périodiquement (et automatiquement) retirée de celui-ci par l'intermédiaire d'un réseau de tuyauterie d'aspiration 40 qui s'ouvrent dans l'écrémeur.

On notera qu'aucun dispositif actif n'est nécessaire pour cette évacuation de l'huile écrémée. Seule une vanne « tout ou rien » 42 en amont de la connexion du réseau de tuyauterie d'aspiration 40 sur la ligne d'écoulement polyphasique du côté se dirigeant vers la surface est nécessaire pour permettre cette opération d'aspiration périodique du volume d'huile écrémée. En particulier, la force d'entraînement de l'huile est obtenue grâce à la différence de pression entre la pression à l'intérieur du réservoir (correspondant à la pression hydrostatique sous-marine au fond de la mer) et la pression de fonctionnement de la ligne d'écoulement polyphasique qui est plus faible pour permettre une augmentation de la récupération d'huile à partir du réservoir.

Le réservoir 20-1 comprend encore en partie basse des moyens de collecte et d'évacuation périodique de particules solides 44 qui peuvent être éventuellement déposées sur le plancher 26 du réservoir.

Ces particules solides 44 sont typiquement constituées par du sédiment résiduel solide (à savoir du sable) qui est décanté à l'intérieur du réservoir en raison du long temps de séjour de l'eau. Ces particules sont en petite quantité et de taille très réduite (l'essentiel du sable présent dans l'eau produite ayant été traité en amont du réservoir).

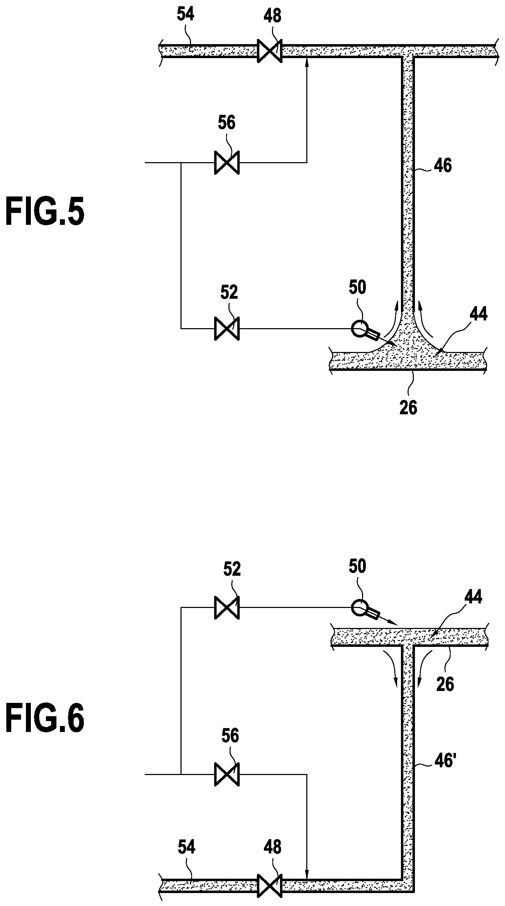

Comme représenté sur la figure 5, les moyens de collecte et d'évacuation périodique de particules solides peuvent comprendre un réseau de tuyaux d'aspiration 46 qui sont commandés par une vanne 48, et des buses d'injection d'eau 50 qui viennent injecter de l'eau sous pression en direction du plancher 26 du réservoir.

Plus précisément, les tuyaux d'aspiration 46 sont répartis sur toute la surface du plancher 26 du réservoir (voir figures 2 et 3) et les buses d'injection d'eau 50 sont alimentées en eau depuis la pompe haute-pression 22 par l'intermédiaire d'une vanne 52 et sont distribuées de manière appropriée à une courte distance du plancher du réservoir.

De plus, de manière similaire à l'aspiration mentionnée ci-dessus relative à la procédure d'évacuation de l'huile accumulée, aucun dispositif actif n'est nécessaire pour éliminer les particules solides 44. Seule une vanne 48 « tout ou rien » en amont de la connexion du réseau de tuyaux d'aspiration 46 sur une ligne d'embranchement 54 connectée à la ligne d'écoulement polyphasique (colonne montante 16) du côté surface est requise pour permettre le fonctionnement de l'aspiration périodique, la force d'entraînement étant la différence de pression entre la pression à l'intérieur du réservoir (correspondant à la pression hydrostatique sous-marine au fond de la mer) et la pression de fonctionnement de la ligne d'écoulement polyphasique qui est plus faible.

Par ailleurs, il peut être prévu d'injecter de l'eau sous pression dans la ligne d'écoulement polyphasique 54 en amont de la vanne 48 avant son ouverture, cette eau sous pression provenant également de la sortie de la pompe haute-pression 22 par l'intermédiaire d'une vanne 56.

Dans une variante de réalisation représentée sur la figure 6, les tuyaux d'aspiration 46' des moyens de collecte et d'évacuation périodique de particules solides 44 sont externes au réservoir, c'est-à-dire qu'ils sont situés sous le plancher 26 du réservoir à l'extérieur de celui-ci.

Dans cette variante de réalisation, le fonctionnement de l'évacuation des particules solides restent identique à celui décrit en liaison avec la figure 5.

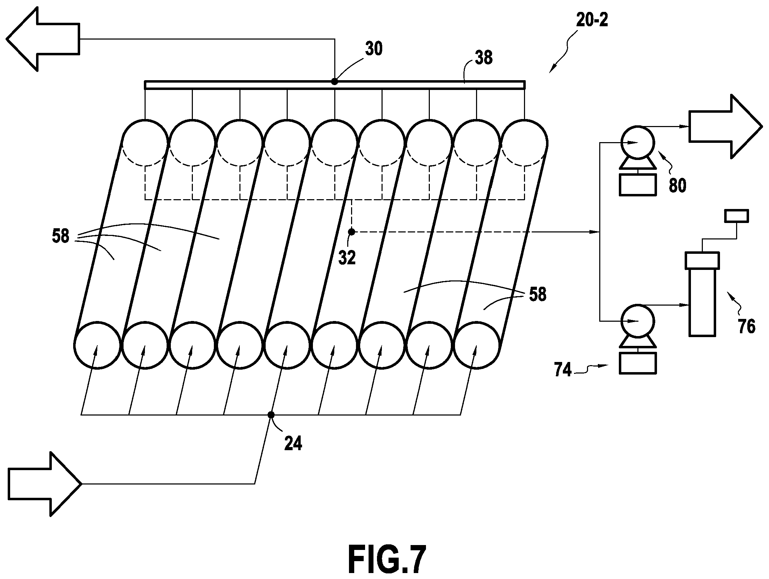

On décrira maintenant en liaison avec les figures 7 à 8 la configuration géométrique d'un réservoir selon un deuxième mode de réalisation de l'invention.

Dans ce deuxième mode de réalisation, le réservoir 20-2 présente un assemblage d'une pluralité de conduites 58 (ou tronçons de tuyau) juxtaposées de grand diamètre (typiquement supérieur à 3m) et de grande longueur (typiquement quelques centaines de mètres) qui sont disposées parallèlement les unes aux autres.

Les dimensions et le nombre de conduites 58 sont déterminés en fonction du débit de l'eau produite à traiter pour une application spécifique. A titre d'exemple, pour 100 000 barils par jour d'eau à éliminer (environ 16 000 m³/jour) et un temps de séjour d'une journée, on pourra avoir 10 conduites juxtaposées ayant chacune un diamètre de 4m, et une longueur de 135 m.

L'entrée en eau 24 du réservoir 20-2 est située à une même extrémité d'entrée de chaque conduite 58, et les sorties en huile 30 et en eau 32 du réservoir sont situées à l'extrémité opposée des conduites (appelée extrémité de sortie).

Comme pour le premier mode de réalisation précédemment décrit, la sortie en huile 30 s'effectue en partie haute des conduites 58 à une même extrémité de celles-ci au travers d'un dispositif de collecte 38 de gouttelettes d'huile (ou écrémeur) et de moyens d'évacuation périodique de l'huile écrémée (non représentés sur la figure).

De même, le réservoir 20-2 peut comprendre en outre des moyens de collecte et d'évacuation périodique de particules solides qui se seraient déposées en partie basse des conduites 58 du réservoir.

Dans ce deuxième mode de réalisation, de tels moyens de collecte (non représentés) se présentent sous la forme des moyens décrits en liaison avec la figure 6 (c'est-à-dire avec les tuyaux d'aspiration situés à l'extérieur des conduites du réservoir).

Par ailleurs, le fond marin sur lequel repose le réservoir 20-2 présente avantageusement une légère inclinaison horizontale de sorte à pouvoir faire reposer les conduites 58 pour que leur extrémité de sortie (celle munie des sorties en huile 30 et en eau 32) soit inclinée vers le haut par rapport à leur extrémité d'entrée (celle munie de l'entrée en eau 24).

En d'autres termes, il est avantageux d'exploiter l'inclinaison du fond marin pour légèrement incliner les conduites du réservoir vers le haut dans la direction d'écoulement de l'eau. Cette inclinaison vers le haut permet ainsi de faciliter la collecte de l'huile à l'extrémité de sortie des conduites.

A défaut de fond marin présentant une légère inclinaison horizontale (cas d'un fond marin sur lequel repose le réservoir qui est horizontal), il est possible de faire reposer les conduites du réservoir sur le fond marin par l'intermédiaire de moyens d'inclinaison de sorte à ce que leur extrémité de sortie soit inclinée vers le haut par rapport à leur extrémité d'entrée.

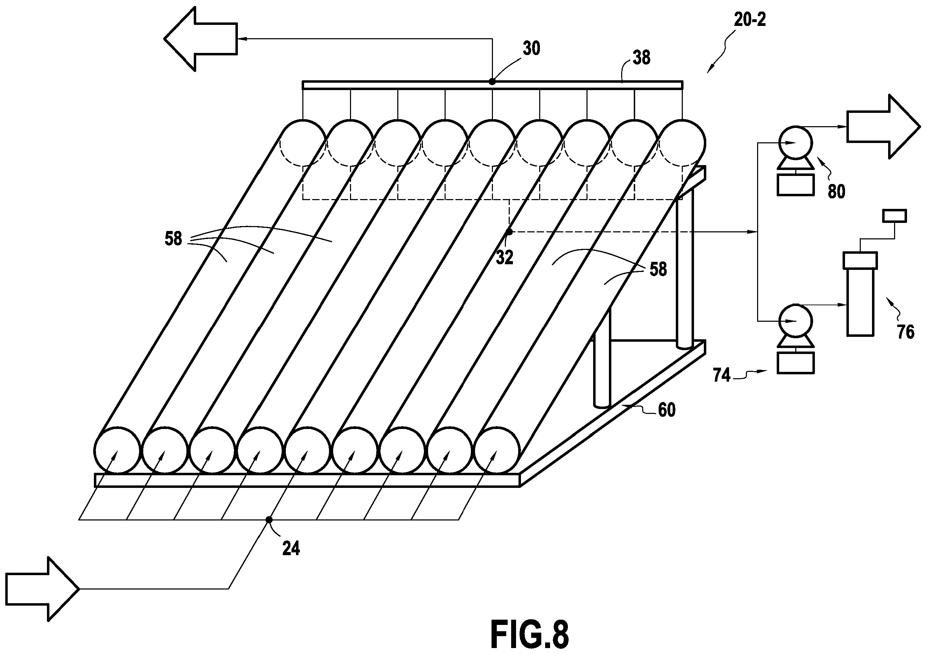

La variante de réalisation de la figure 8 représente un exemple de mise en œuvre de moyens d'inclinaison.

Dans cette variante de réalisation, le réservoir 20-2 est identique à celui décrit en liaison avec la figure 7 avec ses conduites 58 juxtaposées de grand diamètre et de grande longueur.

Par rapport au mode de réalisation décrit en liaison avec la figure 7, les conduites 58 du réservoir reposent ici sur une structure rigide de supports 60 donnant une inclinaison aux conduites dans la direction d'écoulement de l'eau.

On notera que les conduites 58 des réservoirs 20-2 décrits en liaison avec les figures 7 et 8 peuvent avoir une section circulaire comme représenté sur ces figures. Alternativement, dans une variante de réalisation non représentée sur les figures, les conduites du réservoir présentent une section carré ou rectangulaire.

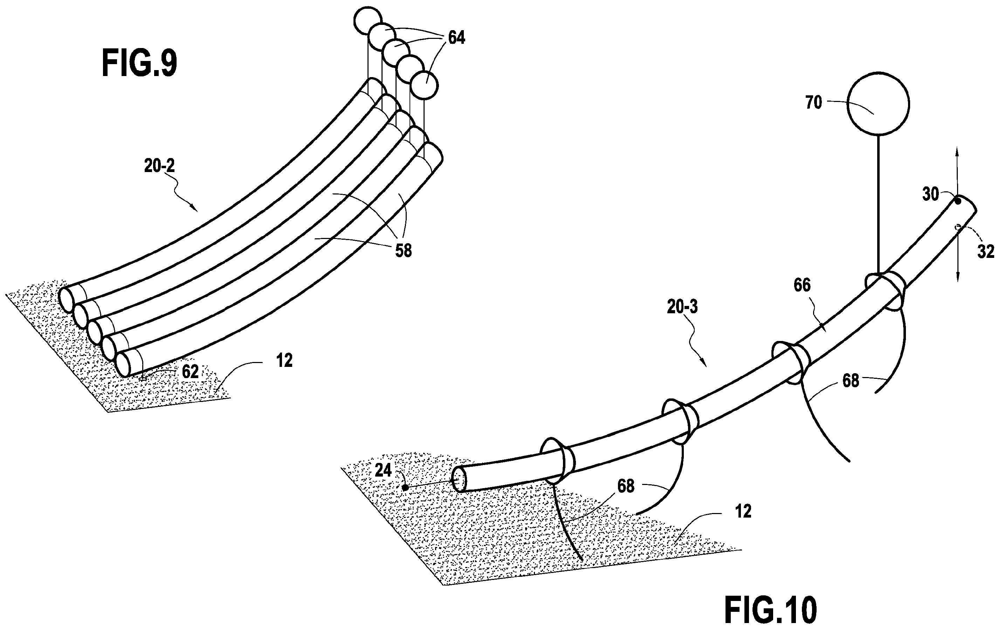

En liaison avec la figure 9, on décrira maintenant une variante de réalisation de ce deuxième mode de réalisation du réservoir selon l'invention.

Dans cette variante de réalisation, le réservoir 20-2 présente toujours un assemblage d'une pluralité de conduites 58 juxtaposées de grand diamètre et de grande longueur qui sont disposées parallèlement les unes aux autres (les autres éléments du réservoir ne sont pas représentés sur la figure 9).

Dans cette variante de réalisation, les conduites 58 sont maintenues inclinées dans la direction d'écoulement de l'eau grâce à des systèmes d'ancrage 62 sur le fond marin 12 au niveau de leur extrémité d'entrée, et grâce à des systèmes de flotteurs 64 reliés à leur extrémité de sortie pour les incliner vers le haut par rapport aux extrémités d'entrée.

En d'autres termes, on donne ici aux conduites 58 du réservoir une forme de caténaire par l'emploi de flotteurs et de systèmes d'ancrage.

En liaison avec la figure 10, on décrira maintenant la configuration géométrique d'un réservoir 20-3 selon un troisième mode de réalisation de l'invention.

Dans ce troisième mode de réalisation, le réservoir 20-3 comprend une unique conduite 66 de grand diamètre (typiquement supérieur à 3m) et de très grande longueur (typiquement plusieurs centaines de mètres à quelques kilomètres).

Les dimensions de la conduite 66 sont déterminées en fonction du débit de l'eau produite à traiter pour une application spécifique. A titre d'exemple, pour 100 000 barils par jour d'eau à éliminer (environ 16 000 m³/jour) et un temps de séjour d'une journée, la conduite 66 pourra présenter un diamètre de 4 m et une longueur de 1350 m.

L'entrée en eau 24 du réservoir 20-3 est située à une extrémité d'entrée de la conduite 66 qui est ancrée sur le fond marin 12 par des systèmes d'amarrage 68, et les sorties en huile 30 et en eau 32 du réservoir sont situées à l'extrémité opposée de la conduite (extrémité de sortie) qui est reliée à des flotteurs 70 pour donner à la conduite une forme de caténaire.

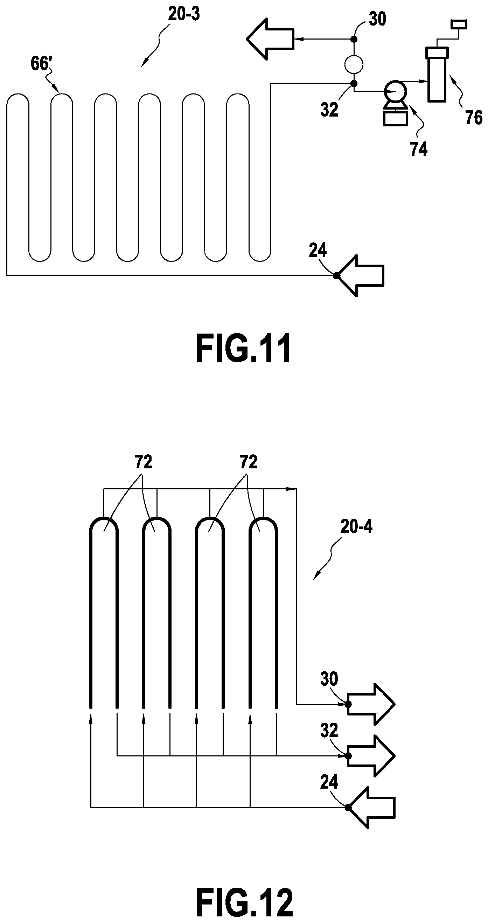

En liaison avec la figure 11, on décrira maintenant la configuration géométrique d'une variante du réservoir selon le troisième mode de réalisation de l'invention.

Dans cette variante de réalisation, le réservoir 20-3 comprend également une unique conduite 66' qui ne s'étend pas selon une direction unique mais qui présente une forme de serpentin. L'entrée en eau 24 du réservoir 20-3 est toujours située à une extrémité d'entrée de la conduite 66', et les sorties en huile 30 et en eau 32 du réservoir sont situées à l'extrémité opposée de la conduite (extrémité de sortie).

L'encombrement de l'installation peut ainsi être réduit.

En liaison avec la figure 12, on décrira maintenant la configuration géométrique d'un réservoir selon un quatrième mode de réalisation de l'invention.

Dans ce quatrième mode de réalisation, le réservoir 20-4 présente un assemblage d'une pluralité de conduites 72 (ou tronçons de tuyau) juxtaposées de grand diamètre (typiquement supérieur à 3m) et de grande longueur (typiquement quelques centaines de mètres) qui sont disposées en boucles.

Les dimensions et le nombre de conduites 72 sont déterminés en fonction du débit de l'eau produite à traiter pour une application spécifique.

Par ailleurs, l'entrée en eau 24 du réservoir 20-4 est située à une extrémité d'entrée de chaque conduite 72, et les sorties en huile 30 et en eau 32 du réservoir sont situées à l'extrémité opposée de chaque conduite.

Plus précisément, en fonction de l'inclinaison des boucles de conduites 72, la sortie en huile 30 pourra s'effectuer au niveau de la boucle des conduites (cas de la figure 12 - inclinaison vers le haut du réservoir) ou au niveau du bas des boucles (cas d'une inclinaison vers le bas du réservoir - non représenté sur les figures).

Dans une variante des figures 11 et 12 non représentée sur les figures, la ou les conduites peuvent avoir une forme de spirale.

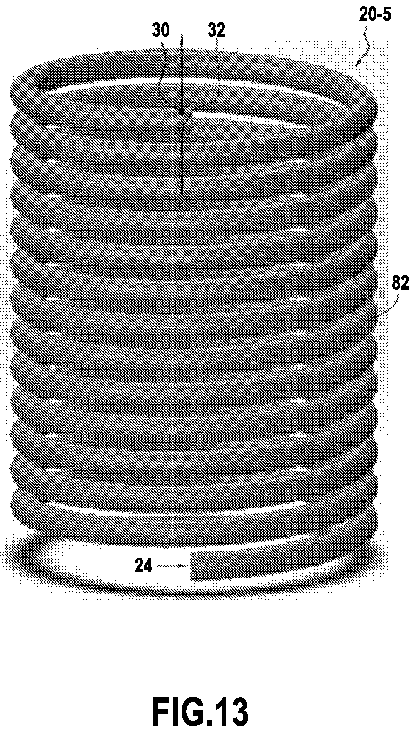

En liaison avec la figure 13, on décrira maintenant la configuration géométrique d'un réservoir selon un cinquième mode de réalisation de l'invention.

Dans ce cinquième mode de réalisation, le réservoir 20-5 comprend une unique conduite 82 formant une hélice. Le diamètre et la longueur de cette conduite en forme d'hélice dépendent du débit d'eau à traiter. Par exemple, la conduite 82 pourra présenter un diamètre de 3,5 m et être enroulée sur un cylindre de 46 m de diamètre et de 42 m de hauteur, ce qui représente un débit d'environ 100 000 barils par jour d'eau à éliminer (environ 16 000 m³/jour).

Dans ce mode de réalisation, l'entrée en eau 24 du réservoir 20-5 est toujours située à une extrémité d'entrée de la conduite 82, et les sorties en huile 30 et en eau 32 du réservoir sont situées à l'extrémité opposée de la conduite (extrémité de sortie).

Dans les modes de réalisation décrits en liaison avec les figures 7 à 13, le ou les conduites sont réalisées à partir de matériaux en plastique polymère, tel qu'en polyéthylène haute densité de la marque Weholite^{®} ou équivalent.

Dans ce cas la paroi intérieure de la ou des conduites pourrait être revêtue d'un matériau apte à être au contact des solvants contenus dans le pétrole, (principalement les coupes aromatiques), comme par exemple le téflon^{®}.

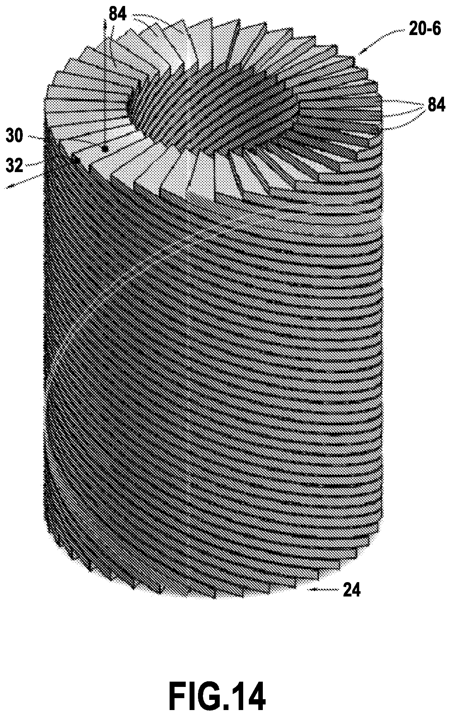

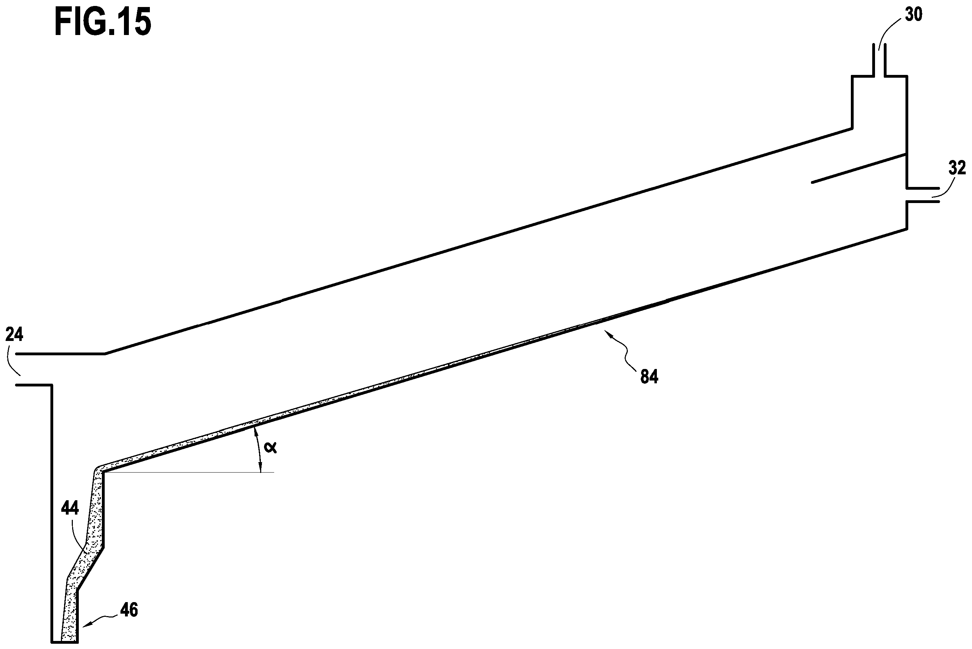

En liaison avec les figures 14 et 15, on décrira maintenant la configuration géométrique d'un réservoir selon un sixième mode de réalisation de l'invention.

Dans ce sixième mode de réalisation, le réservoir 20-6 comprend une pluralité de canaux 84 de section parallélépipédique qui sont disposés en hélice. Les dimensions des canaux et de l'hélice qu'ils forment dépendent du débit d'eau à traiter. A titre d'exemple, les canaux 84 pourront présenter chacun une hauteur de 0,5 m et une largeur de 4 m et l'hélice qu'ils forment pourra être disposée sur un cylindre de diamètre intérieur de 8 m et de diamètre extérieur de 16 m, une hauteur de 28 m et ayant un angle α avec le plan horizontal de 30° (voir figure 15), œ qui représente un volume total de 4256 m³ environ.

La figure 15 représente plus en détails l'un des canaux 84 d'un tel réservoir. En particulier, dans ce mode de réalisation, l'entrée en eau 24 du réservoir est située à une extrémité d'entrée de chaque canal 84, et les sorties en huile 30 et en eau 32 du réservoir sont situées à l'extrémité opposée de chaque canal.

De plus, les moyens de collecte et d'évacuation périodique des particules solides 44 sont ici réalisés pour chaque canal 84 par un tuyau d'aspiration 46 située en partie basse de l'extrémité d'entrée du canal.

Un tel réservoir présente de nombreux avantages. En particulier, la pente de l'hélice permet d'éviter une accumulation des particules solides et la formation de poches d'huile. De plus, le trajet d'une goutte d'huile entre l'entrée et la sortie du réservoir est minimisé, ce qui permet de réduire drastiquement le volume du réservoir pour une performance donnée. En outre, comme le trajet des gouttes d'huile est très court, le réservoir peut être plat et de faible hauteur.

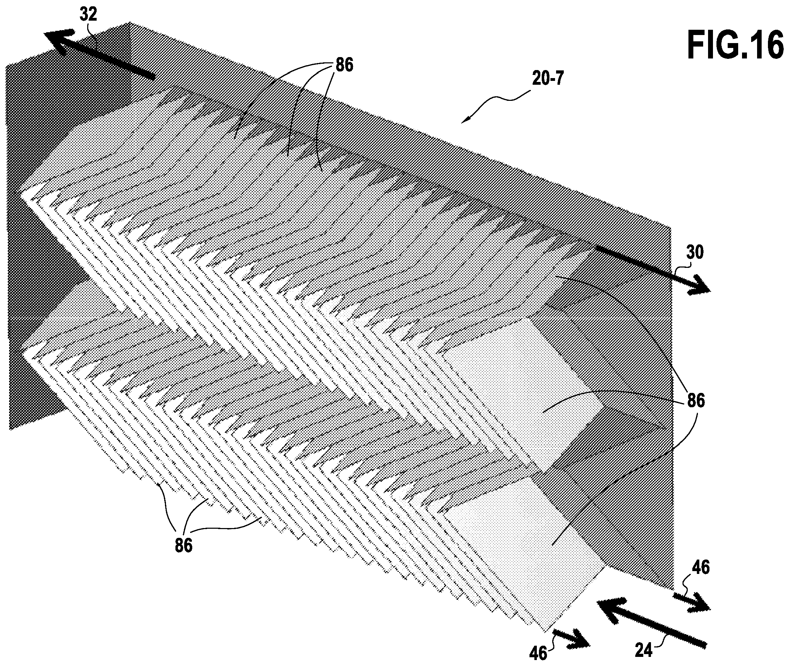

En liaison avec la figure 16, on décrira maintenant la configuration géométrique d'un réservoir selon un septième mode de réalisation de l'invention.

Dans ce septième mode de réalisation, le réservoir 20-7 comprend une pluralité de tuiles 86 identiques en forme chacune de dièdre, inclinées à 30° par rapport à l'horizontale, et agencées en quatre séries. Ces tuiles 86 définissent autant de canaux en zigzag à l'intérieur desquels les gouttelettes d'huile ont tendance à s'élever et être guidées par l'angle du dièdre, tandis que les particules solides ont tendance à tomber de l'arête des faces du dièdre.

A titre d'exemple, ce réservoir 20-7 peut être inscrit dans un parallélépipède rectangle de 10m de large par 44m de long et 23m de haut, dans lequel les tuiles ont chacune une section de passage de 0,75m de haut par 11m de large, pour une longueur développé de 40m. Ceci représente un volume de 6600 m³ pour un volume du parallélépipède de 10120 m³.

Dans ce mode de réalisation, l'entrée en eau 24 du réservoir 20-7 est située à une extrémité d'entrée en partie basse du parallélépipède, et les sorties en huile 30 et en eau 32 du réservoir sont situées à des extrémités opposée en partie haute du parallélépipède.

De plus, les moyens de collecte et d'évacuation périodique des particules solides sont ici réalisés en partie basse par des tuyaux d'aspiration 46.

Quel que soit la configuration du réservoir, on notera que la sortie en eau du réservoir peut déboucher directement dans la mer par l'intermédiaire d'une pompe basse-pression 74 couplée éventuellement avec un système de filtration 76.

Dans ce cas, les éléments filtrants de ce système de filtration 76 présenteront une faible charge de colmatage pendant le fonctionnement de l'installation selon l'invention, en raison de la très faible concentration en huile résiduelle attendue dans l'eau éliminée, permettant une campagne d'opération longue, avant de nécessiter un remplacement d'élément filtrant. Ainsi, le système de filtration doit être conçu pour permettre l'échange de ces éléments par ROV (avec un outillage développé pour le besoin), sans nécessiter la récupération de l'ensemble du module, afin de respecter la robustesse, la fiabilité et la disponibilité élevées de l'installation selon l'invention.

Alternativement, la sortie en eau du réservoir peut déboucher vers un puits d'injection d'eau 7 par l'intermédiaire d'une pompe haute-pression 80 (voir la figure 2 notamment).

## Revendications

1. Installation (2) d'élimination sous-marine de l'eau produite lors de la production sous-marine d'hydrocarbures par grandes profondeurs, comprenant :
- une station sous-marine de séparation huile/eau (14) alimentée en fluides provenant directement d'au moins un puits de production d'hydrocarbures (6), fonctionnant à une pression indépendante de la pression environnante et inférieure à celle-ci, et comprenant une sortie en huile (14c) destinée à être reliée à une unité de production (10) et une sortie en eau (14d) ;
- un réservoir (20-1 à 20-6) plat de séparation huile/eau par gravité reposant sur le fond marin, alimenté en continu en eau sortant de la station de séparation huile/eau, fonctionnant à une pression sensiblement égale à la pression environnante, et comprenant une sortie en huile (30) destinée à être reliée à l'unité de production et une sortie en eau (32); et
- une pompe haute-pression (22) sous-marine reliée, d'une part à la sortie en eau (14d) de la station de séparation huile/eau (14), et d'autre part à une entrée en eau (24) dudit réservoir pour élever la pression de l'eau sortant de la station de séparation huile/eau jusqu'à la pression environnante avant son admission à l'intérieur dudit réservoir.

2. Installation selon la revendication 1, dans laquelle le réservoir plat présente une configuration géométrique permettant un temps de séjour élevé de l'eau produite, un chemin de migration faible pour les gouttelettes d'huile présentes dans l'eau et une surface d'interface huile/eau importante afin de favoriser la séparation huile/eau par gravité.

3. Installation selon l'une des revendications 1 et 2, dans laquelle le réservoir comprend en outre en partie haute un dispositif de collecte de gouttelettes d'huile (38) s'ouvrant vers la sortie en huile (30) du réservoir.

4. Installation selon la revendication 3, dans laquelle le réservoir comprend en outre en partie haute des moyens d'évacuation périodique de l'huile (40, 42) présente au niveau du dispositif de collecte.

5. Installation selon la revendication 4, dans laquelle les moyens d'évacuation périodique des gouttelettes d'huile comprennent un réseau de tuyaux d'aspiration (40) commandé par une vanne tout ou rien (42) apte à s'ouvrir dans le dispositif de collecte.

6. Installation selon l'une quelconque des revendications 1 à 5, dans laquelle le réservoir comprend en outre en partie basse des moyens (46-52) de collecte et d'évacuation périodique de particules solides (44) éventuellement déposées sur un plancher (26) du réservoir.

7. Installation selon la revendication 6, dans laquelle les moyens de collecte et d'évacuation des particules solides comprennent un réseau de tuyaux d'aspiration (46 ; 46') commandés par une vanne (48), et des buses d'injection d'eau (50) sous pression en direction du plancher (26) du réservoir.

8. Installation selon l'une quelconque des revendications 1 à 7, dans laquelle la sortie en huile (30) du réservoir est reliée à la sortie en huile (14c) de la station de séparation huile/eau (14) par l'intermédiaire d'au moins une vanne tout ou rien (42).

9. Installation selon l'une quelconque des revendications 1 à 8, dans laquelle la sortie en eau (32) du réservoir débouche dans la mer par l'intermédiaire d'une pompe basse-pression (74) ou débouche vers un puits d'injection d'eau (78) par l'intermédiaire d'une pompe haute-pression (80).

10. Installation selon l'une quelconque des revendications 1 à 9, dans laquelle le réservoir (20-1) présente une forme cylindrique avec un plancher (26) plat, un toit (28) incliné vers le haut afin de faciliter la collecte des gouttelettes d'huile, une entrée en eau (24) qui débouche à l'intérieur du réservoir au centre de celui-ci par l'intermédiaire d'un dispositif cyclonique (34) afin d'imposer une vitesse de rotation initiale à l'eau admise dans le réservoir, une sortie en huile (30) qui est positionnée au niveau du toit incliné, et une sortie en eau (32) qui comprend une pluralité d'écopes (36) pratiquées à la périphérie du réservoir et s'ouvrant à l'intérieur de celui-ci selon des directions tangentielles.

11. Installation selon l'une quelconque des revendications 1 à 9, dans laquelle le réservoir (20-2) présente une pluralité de conduites (58) de grand diamètre et de grande longueur disposées parallèlement les unes aux autres, reposant sur un fond marin, l'entrée en eau (24) du réservoir s'effectuant à une même extrémité d'entrée de chaque conduite, et la sortie en huile (30) et la sortie en eau (32) du réservoir s'effectuant à une même extrémité opposée de sortie de chaque conduite.

12. Installation selon la revendication 11, dans laquelle le fond marin sur lequel repose le réservoir présente une inclinaison horizontale, les conduites (58) reposant sur le fond marin (12) de sorte à ce que leur extrémité de sortie soit inclinée vers le haut par rapport à leur extrémité d'entrée.

13. Installation selon la revendication 11, dans laquelle le fond marin sur lequel repose le réservoir est horizontal, les conduites reposant sur le fond marin par l'intermédiaire de moyens d'inclinaison de sorte à ce que leur extrémité de sortie soit inclinée vers le haut par rapport à leur extrémité d'entrée.

14. Installation selon la revendication 13, dans laquelle les moyens d'inclinaison comprennent des supports (60) donnant une inclinaison aux conduites du réservoir qui reposent sur ceux-ci.

15. Installation selon la revendication 13, dans laquelle les moyens d'inclinaison comprennent des systèmes d'ancrage (62) sur le fond marin (25) de l'extrémité d'entrée des conduites et des systèmes de flotteurs (64) reliés à l'extrémité de sortie des conduites pour les incliner vers le haut par rapport aux extrémités d'entrée.

16. Installation selon l'une quelconque des revendications 1 à 9, dans laquelle le réservoir (20-3) présente une conduite (66) de grand diamètre et de très grande longueur, l'entrée en eau (24) du réservoir s'effectuant à une extrémité d'entrée de la conduite qui est ancrée sur le fond marin (25), et la sortie en huile (30) et la sortie en eau (32) du réservoir s'effectuant à l'extrémité opposée de sortie de la conduite qui est reliée à des flotteurs (70) pour donner à la conduite une forme de caténaire.

17. Installation selon l'une quelconque des revendications 11 à 16, dans laquelle chaque conduite présente une forme en boucle, en serpentin ou en spirale.

18. Installation selon l'une quelconque des revendications 1 à 9, dans laquelle le réservoir (20-5) comprend une unique conduite (82) formant une hélice, l'entrée en eau (24) du réservoir s'effectuant à une extrémité d'entrée de la conduite, et la sortie en huile (30) et la sortie en eau (32) du réservoir s'effectuant à l'extrémité opposée de sortie de la conduite.

19. Installation selon l'une quelconque des revendications 1 à 9, dans laquelle le réservoir (20-6) comprend une pluralité de canaux (84) de section parallélépipédique qui sont disposés en hélice, l'entrée en eau (24) du réservoir s'effectuant à une même extrémité d'entrée de chaque canal, et la sortie en huile (30) et la sortie en eau (32) du réservoir s'effectuant à une même extrémité opposée de sortie de chaque canal.

20. Installation selon l'une quelconque des revendications 1 à 9, dans laquelle le réservoir (20-7) comprend une pluralité de tuiles (86) identiques en forme chacune de dièdre, inclinées à 30° par rapport à l'horizontale, et agencées en plusieurs séries de tuiles.

21. Installation selon l'une quelconque des revendications 1 à 20, dans laquelle la pompe haute-pression (18) est une pompe de coalescence à plusieurs étages.

22. Installation selon l'une quelconque des revendications 1 à 21, dans laquelle le réservoir comprend une enveloppe rigide.

23. Procédé d'élimination sous-marine de l'eau produite lors de la production sous-marine d'hydrocarbures par grandes profondeurs, comprenant l'alimentation en fluides provenant directement d'au moins un puits de production d'hydrocarbure (6) d'une station sous-marine de séparation huile/eau (14) fonctionnant à une pression indépendante de la pression environnante et inférieure à celle-ci, et l'alimentation en continu d'un réservoir (20-1 à 20-6) plat de séparation huile/eau par gravité reposant sur le fond marin par de l'eau produite sortant de la station de séparation huile/eau, l'eau produite alimentant le réservoir ayant été préalablement pressurisée pour atteindre une pression sensiblement égale à la pression environnante.

## Patentansprüche

1. Anlage (2) zur Unterwasserentsorgung von Produktionswasser, das bei der Unterwasserförderung von Kohlenwasserstoffen in großen Tiefen anfällt, umfassend:
- eine Unterwasser-Öl-Wasser-Abscheidestation (14), der Fluide zugeführt werden, die direkt aus mindestens einem Kohlenwasserstoff-Förderbohrloch (6) stammen, die bei einem Druck arbeitet, der unabhängig vom Umgebungsdruck und niedriger als dieser ist, und einen Ölauslass (14c) zur Verbindung mit einer Produktionseinheit (10) sowie einen Wasserauslass (14d) umfasst;
- einen flachen, auf dem Meeresboden aufliegenden Schwerkraft-Öl-Wasser-Abscheidebehälter (20-1 bis 20-6), der kontinuierlich mit Wasser aus der Öl-Wasser-Abscheidestation gespeist wird, bei einem Druck arbeitet, der im Wesentlichen dem Umgebungsdruck entspricht, und einen Ölauslass (30) zur Verbindung mit der Produktionseinheit sowie einen Wasserauslass (32) umfasst; und
- eine Unterwasser-Hochdruckpumpe (22), die einerseits mit dem Wasserauslass (14d) der Öl-Wasser-Abscheidestation (14) und andererseits mit einem Wassereinlass (24) des Behälters verbunden ist, um den Druck des aus der Öl-Wasser-Abscheidestation austretenden Wassers vor dessen Einleitung in das Innere des Behälters auf Umgebungsdruck zu erhöhen.

2. Anlage nach Anspruch 1, wobei der flache Behälter eine geometrische Konfiguration aufweist, die eine lange Verweildauer des Produktionswassers, einen kurzen Wanderweg für die im Wasser vorhandenen Öltröpfchen und eine große Öl-Wasser-Grenzfläche ermöglicht, um die Öl-Wasser-Abscheidung durch Schwerkraft zu begünstigen.

3. Anlage nach einem der Ansprüche 1 und 2, wobei der Behälter im oberen Bereich ferner eine Öltröpfchenauffangvorrichtung (38) aufweist, die sich zum Ölauslass (30) des Behälters hin öffnet.

4. Anlage nach Anspruch 3, wobei der Behälter im oberen Bereich ferner Mittel (40, 42) zum periodischen Abführen des an der Auffangvorrichtung vorhandenen Öls aufweist.

5. Anlage nach Anspruch 4, wobei die Mittel zum periodischen Abführen der Öltröpfchen ein Netz von Saugrohren (40) umfassen, die von einem Auf/Zu-Ventil (42) gesteuert werden, das sich in die Auffangvorrichtung öffnen lässt.

6. Anlage nach einem der Ansprüche 1 bis 5, wobei der Behälter im unteren Bereich ferner Mittel (46-52) zum Auffangen und periodischen Abführen von Feststoffpartikeln (44) umfasst, die sich gegebenenfalls auf dem Boden (26) des Behälters abgelagert haben.

7. Anlage nach Anspruch 6, wobei die Mittel zum Auffangen und Abführen der Feststoffpartikel ein Netz von Saugrohren (46; 46') umfassen, die von einem Ventil (48) gesteuert werden, sowie Düsen (50) zum Einspritzen von unter Druck stehendem Wasser in Richtung des Bodens (26) des Behälters.

8. Anlage nach einem der Ansprüche 1 bis 7, wobei der Ölauslass (30) des Behälters über mindestens ein Auf/Zu-Ventil (42) mit dem Ölauslass (14c) der Öl-Wasser-Abscheidestation (14) verbunden ist.

9. Anlage nach einem der Ansprüche 1 bis 8, wobei der Wasserauslass (32) des Behälters über eine Niederdruckpumpe (74) ins Meer mündet oder über eine Hochdruckpumpe (80) in einen Wasserinjektionsschacht (78) mündet.

10. Anlage nach einem der Ansprüche 1 bis 9, wobei der Behälter (20-1) eine zylindrische Form mit einem flachen Boden (26) aufweist, einem nach oben geneigten Dach (28) zur Erleichterung des Auffangens von Öltröpfchen, einem Wassereinlass (24), der über eine Zyklonvorrichtung (34) in das Innere des Behälters in dessen Mitte mündet, um dem in den Behälter einströmenden Wasser eine Anfangsrotationsgeschwindigkeit zu verleihen, einem Ölauslass (30), der auf Höhe des geneigten Daches positioniert ist, und einem Wasserauslass (32), der eine Vielzahl von Schöpfschaufeln (36) umfasst, die am Rand des Behälters angebracht sind und sich nach innen in tangentialer Richtung öffnen.

11. Anlage nach einem der Ansprüche 1 bis 9, wobei der Behälter (20-2) eine Vielzahl von Leitungen (58) mit großem Durchmesser und großer Länge aufweist, die parallel zueinander angeordnet sind und auf dem Meeresboden aufliegen, wobei der Wassereinlass (24) des Behälters an einem gemeinsamen Einlassende jeder Leitung erfolgt und der Ölauslass (30) sowie der Wasserauslass (32) des Behälters an einem gemeinsamen gegenüberliegenden Auslassende jeder Leitung erfolgen.

12. Anlage nach Anspruch 11, wobei der Meeresboden, auf dem der Behälter aufliegt, eine horizontale Neigung aufweist und die Leitungen (58) so auf dem Meeresboden (12) aufliegen, dass ihr Auslassende gegenüber ihrem Einlassende nach oben geneigt ist.

13. Anlage nach Anspruch 11, wobei der Meeresboden, auf dem der Behälter aufliegt, horizontal ist und die Leitungen über Neigungsvorrichtungen auf dem Meeresboden aufliegen, sodass ihr Auslassende gegenüber ihrem Einlassende nach oben geneigt ist.

14. Anlage nach Anspruch 13, wobei die Neigungsvorrichtungen Halterungen (60) umfassen, die den darauf aufliegenden Leitungen des Behälters eine Neigung verleihen.

15. Anlage nach Anspruch 13, wobei die Neigungsvorrichtungen Verankerungssysteme (62) am Meeresboden (25) am Einlassende der Leitungen und mit dem Auslassende der Leitungen verbundene Schwimmersysteme (64) umfassen, um diese gegenüber den Einlassenden nach oben zu neigen.

16. Anlage nach einem der Ansprüche 1 bis 9, wobei der Behälter (20-3) eine Leitung (66) mit großem Durchmesser und sehr großer Länge aufweist, wobei der Wassereinlass (24) des Behälters an einem Einlassende der Leitung erfolgt, das auf dem Meeresboden (25) verankert ist, und der Ölauslass (30) sowie der Wasserauslass (32) des Behälters am gegenüberliegenden Ende des Leitungsausgangs erfolgen, das mit Schwimmern (70) verbunden ist, um der Leitung eine Kettenlinienform zu verleihen.

17. Anlage nach einem der Ansprüche 11 bis 16, wobei jede Leitung eine Schleifen-, Serpentinen- oder Spiralform aufweist.

18. Anlage nach einem der Ansprüche 1 bis 9, wobei der Behälter (20-5) eine einzige, spiralförmige Leitung (82) umfasst, wobei der Wassereinlass (24) des Behälters an einem Einlassende der Leitung erfolgt und der Ölauslass (30) sowie der Wasserauslass (32) des Behälters am gemeinsamen gegenüberliegenden Auslassende der Leitung erfolgen.

19. Anlage nach einem der Ansprüche 1 bis 9, wobei der Behälter (20-6) eine Vielzahl von Kanälen (84) mit quaderförmigem Querschnitt umfasst, die spiralförmig angeordnet sind, wobei der Wassereinlass (24) des Behälters an einem gemeinsamen Einlassende jedes Kanals erfolgt und der Ölauslass (30) sowie der Wasserauslass (32) des Behälters an einem gemeinsamen gegenüberliegenden Auslassende jedes Kanals erfolgen.

20. Anlage nach einem der Ansprüche 1 bis 9, wobei der Behälter (20-7) eine Vielzahl identischer, jeweils zweiseitig geneigter Platten (86) umfasst, die um 30° zur Horizontalen geneigt und in mehreren Fliesenreihen angeordnet sind.

21. Anlage nach einem der Ansprüche 1 bis 20, wobei die Hochdruckpumpe (18) eine mehrstufige Koaleszenzpumpe ist.

22. Anlage nach einem der Ansprüche 1 bis 21, wobei der Behälter eine starre Hülle aufweist.

23. Verfahren zur Unterwasserentsorgung von Produktionswasser, das bei der Unterwasserförderung von Kohlenwasserstoffen in großen Tiefen anfällt, umfassend die Zuführung von Fluiden, die direkt aus mindestens einem Kohlenwasserstoff-Förderbohrloch (6) stammen, zu einer Unterwasser-Öl-Wasser-Abscheidestation (14), die bei einem Druck arbeitet, der unabhängig vom Umgebungsdruck und niedriger als dieser ist, sowie die kontinuierliche Speisung eines flachen, auf dem Meeresboden aufliegenden Schwerkraft-Öl-Wasser-Abscheidebehälters (20-1 bis 20-6) mit Produktionswasser aus der Öl-Wasser-Abscheidestation, wobei das in den Behälter geleitete Produktionswasser zuvor unter Druck gesetzt wurde, um einen Druck zu erreichen, der im Wesentlichen dem Umgebungsdruck entspricht.

## Claims

1. A facility (2) for the subsea disposal of the water produced during deepwater hydrocarbon production, comprising:
- a subsea oil/water separation station (14) fed with fluids coming directly from at least one hydrocarbon production well (6), operating at a pressure independent of and lower than the ambient pressure, and comprising an oil outlet (14c) for connecting to a production unit (10) and a water outlet (14d);
- a flat gravity oil/water separation tank (20-1 to 20-6) resting on the seabed, continuously fed with water leaving the oil/water separation station, operating at a pressure substantially equal to the ambient pressure, and comprising an oil outlet (30) for connecting to the production unit and a water outlet (32); and
- a subsea high-pressure pump (22) connected, on the one hand, to the water outlet (14d) of the oil/water separation station (14) and, on the other hand, to a water inlet (24) of said tank to raise the pressure of the water leaving the oil/water separation station to the ambient pressure before it is admitted into said tank.

2. The facility as claimed in claim 1, wherein the flat tank has a geometric configuration that allows a long residence time of the produced water, a low migration path for the oil droplets present in the water and a large oil/water interface area in order to promote oil/water separation by gravity.

3. The facility as claimed in one of claims 1 and 2, wherein the tank further comprises, at the top, an oil droplet collection device (38) opening toward the oil outlet (30) of the tank.

4. The facility as claimed in claim 3, wherein the tank further comprises, at the top, means for periodically discharging the oil (40, 42) present at the level of the collection device.

5. The facility as claimed in claim 4, wherein the means for periodically discharging the oil droplets comprises a network of suction pipes (40) controlled by an on-off valve (42) capable of opening into the collection device.

6. The facility as claimed in any one of claims 1 to 5, wherein the tank further comprises, at the bottom, means (46-52) for collecting and periodically discharging any solid particles (44) deposited on a floor (26) of the tank.

7. The facility as claimed in claim 6, wherein the means for collecting and discharging solid particles comprise a network of suction pipes (46; 46') controlled by a valve (48), and nozzles for injecting pressurized water (50) toward the floor (26) of the tank.

8. The facility as claimed in any one of claims 1 to 7, wherein the oil outlet (30) of the tank is connected to the oil outlet (14c) of the oil/water separation station (14) via at least one on-off valve (42).

9. The facility as claimed in any one of claims 1 to 8, wherein the water outlet (32) of the tank opens into the sea via a low-pressure pump (74) or opens into a water injection well (78) via a high-pressure pump (80).

10. The facility as claimed in any one of claims 1 to 9, wherein the tank (20-1) has a cylindrical shape with a flat floor (26), an upwardly sloping roof (28) to facilitate the collection of oil droplets, a water inlet (24) which opens into the tank at the center thereof via a cyclonic device (34) to impose an initial rotation speed on the water admitted into the tank, an oil outlet (30) which is positioned at the level of the sloping roof, and a water outlet (32) which comprises a plurality of scoops (36) formed at the periphery of the tank and opening into the tank in tangential directions.

11. The facility as claimed in any one of claims 1 to 9, wherein the tank (20-2) has a plurality of pipes (58) of large diameter and long length arranged parallel to each other, resting on a seabed, the water inlet (24) of the tank being at a same inlet end of each pipe, and the oil outlet (30) and the water outlet (32) of the tank being at a same opposite outlet end of each pipe.

12. The facility as claimed in claim 11, wherein the seabed on which the tank rests has a horizontal slope, the pipes (58) resting on the seabed (12) so that their outlet end is tilted upwards relative to their inlet end.

13. The facility as claimed in claim 11, wherein the seabed on which the tank rests is horizontal, the pipes resting on the seabed via tilting means so that their outlet end is tilted upwards relative to their inlet end.

14. The facility as claimed in claim 13, wherein the tilting means comprises supports (60) giving a tilt to the tank pipes resting thereon.

15. The facility as claimed in claim 13, wherein the tilting means comprises systems for anchoring (62) to the seabed (25) the inlet end of the pipes and float systems (64) connected to the outlet end of the pipes to tilt them upwards relative to the inlet ends.

16. The facility as claimed in any one of claims 1 to 9, wherein the tank (20-3) has a pipe (66) of large diameter and very long length, the water inlet (24) of the tank being at an inlet end of the pipe which is anchored to the seabed (25), and the oil outlet (30) and the water outlet (32) of the tank being at the opposite outlet end of the pipe which is connected to floats (70) to give the pipe a catenary shape.

17. The facility as claimed in any one of claims 11 to 16, wherein each pipe has a loop, serpentine or spiral shape.

18. The facility as claimed in any one of claims 1 to 9, wherein the tank (20-5) comprises a single pipe (82) forming a helix, the water inlet (24) of the tank being at one inlet end of the pipe, and the oil outlet (30) and water outlet (32) of the tank being at the opposite outlet end of the pipe.

19. The facility as claimed in any one of claims 1 to 9, wherein the tank (20-6) comprises a plurality of channels (84) of parallelepipedal cross-section which are arranged in a helix, the water inlet (24) of the tank being at a same inlet end of each channel, and the oil outlet (30) and the water outlet (32) of the tank being at a same opposite outlet end of each channel.

20. The facility as claimed in any one of claims 1 to 9, wherein the tank (20-7) comprises a plurality of identical tiles (86) each in the form of a dihedral, inclined at 30° to the horizontal, and arranged in several series of tiles.

21. The facility as claimed in any one of claims 1 to 20, wherein the high-pressure pump (18) is a multi-stage coalescing pump.

22. The facility as claimed in any one of claims 1 to 21, wherein the tank comprises a rigid shell.

23. A process for the subsea disposal of water produced during deepwater hydrocarbon production, comprising feeding fluids coming directly from at least one hydrocarbon production well (6) to a subsea oil/water separation station (14) operating at a pressure independent of and lower than the ambient pressure and continuously feeding a flat gravity oil/water separation tank (20-1 to 20-6) resting on the seabed with produced water leaving the oil/water separation station, the produced water feeding the tank having first been pressurized to reach a pressure substantially equal to the ambient pressure.
